Europäisches Patentamt

European Patent Office

Office européen des brevets

(19)

(11) Publication number: **0 100 794**
**B1**

# EUROPEAN PATENT SPECIFICATION

(45) Date of publication of patent specification: 03.06.87

(21) Application number: 82200999.9

(22) Date of filing: 09.08.82

(51) Int. Cl.⁴: **B 65 G 47/90,** B 25 J 11/00, F 16 H 21/20

(54) **Pick and place unit having automatical controllable arm with gripper.**

(43) Date of publication of application:
**22.02.84 Bulletin 84/08**

(45) Publication of the grant of the patent:
**03.06.87 Bulletin 87/23**

(84) Designated Contracting States:
**AT BE CH DE FR GB IT LI LU NL SE**

(56) References cited:
**DE-A-2 320 590**
**GB-A- 1 038**
**US-A-3 884 363**

**PRODUCT ENGINEERING, vol. 31, September 1960, page 78, New York, USA "Significant components materials, processes"**

(73) Proprietor: **Texas Instruments Holland B.V.**
**Kolthofsingel 8 Postbox 43**
**NL-7600 AA Almelo (NL)**

(72) Inventor: **Schoenmaker, Hendrik**
**Sluiskade NZ 150**
**7603 XZ Almelo (NL)**
Inventor: **Brouwers, Arnoldus Maria**
**Melissehof 41**
**7641 GB Wierden (NL)**

(74) Representative: **Kooy, Leendert Willem et al**
**OCTROOIBUREAU VRIESENDORP & GAADE**
**P.O. Box 266**
**NL-2501 AW The Hague (NL)**

EP 0 100 794 B1

Courier Press, Leamington Spa, England.

## Description

The present invention relates to a pick and place mechanism comprising an automatically controllable gripper arm with pliers protruding from a frame which are both provided with associated drive means for transferring products from one fixed place adjacent said pick and place mechanism into a tray of a series or trays or vice versa.

Such a mechanism is known from US Patent Specification 3,884,363.

With the aid of said mechanism one tends to displace products of considerably large bulk slowly from a loading plate to a place on a pallet.

With respect to the processing of small products and/or parts between separate machines and units of a line of production, in principal many normal or conventional solutions to partial functions are commercially available, the functions which can be performed by said normal or conventional solutions essentially differ from one another, as well as the embodiments.

A solution to all processing functions which is integrated into one and the same standard (normal or conventional) machine, however, has not been developed up till now.

The said processing functions are to be generally divided into the following partial functions, viz. To unload a production machine or automatic device; to store the products and/or parts in the right way; to load a subsequent production machine from the supply intermediately stored and to collect, if desired, work up and further give information covering the product as to the preceding method for producing and properties of the product.

With respect to loading and unloading production machines a number of categories of solutions are known.

One of the simplest solutions is a mechanical arm which is rigidly coupled with the respective machines, said arm lifting the products displacing them along a fixed way and releasing the product again (a rigid moving mechanism).

A further category includes an electric or pneumatic embodiment, in which the coupling with the respective machine is less rigid, and in which also the pattern of motion of the gripper is simpler and more adjustable (separate linear drive to give two movements according to mutually perpendicular axes and gripper movement), hereto also belong a great number of modular construction systems in which the moving mechanism can be easily changed and adapted to the needs.

Pick and place positions of the gripper are still predetermined in said embodiment, i.e. they cannot be changed during operation of the unit.

The third category of solutions relates to those units in which the pick and place positions as well as the intermediate way are freely programmable, this means that these positions also can be changed during operation of a so-called "Robot" by means of a previously fixed program as well as by a momentary external signal.

This category consists of the so-called "Robots", electronically controlled moving mechanisms having a generally great amount of degrees of freedom.

As to the way of programming there is a great number of variations.

Each of the above-mentioned categories of solutions for the pattern of motion between pick and place position has its own specific advantages and disadvantages.

The most important advantages of a rigid mechanical arm are: a great accuracy and reproduceability, a high speed which is practically independent from the loading, simplicity and reliability, a loading as large as possible on account of the acceleration process to be optimalised, and very good timing and synchronising possibilities with further coupled movements. As disadvantages can be mentioned a rigid system which is hardly to change and hardly to be applied elsewhere, which is limited with respect to possibilities of application, and which enables little or no variations in a pattern of motion during operation.

The pneumatic type has the advantages that the design can be changed for other applications and that a great accuracy of a position is possible by means of stops. The disadvantages are: a lower rate, a speed which depends on the loading, no variations in the pattern of motion during operation, less simple (combination of mechanical, pneumatic and electric components) and thereby less reliable, and an irregular acceleration process, with respect to the pneumatic type the electric type of the pick and place mechanism has the advantage that it generally has more possibilities of variation during operation.

The advantages of using robots are a very great flexibility with respect to possibilities of application as well as to possibilities of variation during operation, practically un-limited possibilities with respect to the pattern of motion, storage and processing possibilities for giving information about the characteristics of the products, good timing possibilities, a good accuracy, a well adjustable acceleration process and the possibility of carrying out additional functions. The disadvantages of these Robots are, however, complicated electronics (necessitate knowhow and specialisation) a rather low rate and a high cost price.

Beside the function of loading and unloading also the storage function is essentially important.

Also with respect hereto there are many possibilities in the first instance to be coarsely divided into an unarranged storage and an arranged storage. By unarranged storage is meant that the products are stored at random in a tank, whereas by arranged storage a fixed orientation on a fixed place is meant. The several possible intermediate forms are left out of consideration herewith.

In order to gain an insight into the advantages and disavantages of both methods the most important properties thereof are mentioned. The advantages of an unarranged storage are the low costs of the storage system, a very cheap unloading solution, and sometimes a cheaper "Loading" solution (with products having good orientation possibilities), the disadvantages of this type of storage are: the great chance of damaging the products, the "Loading" system generally is not a normal or conventional solution but the orientation unit has to be adjusted to the product, an expensive and less reliable construction, no possibilities to accompanying stream of individual product information and for giving information about the characteristics of the products characteristics, and a loading rate which often depends on an orientation mechanism, which may be a limiting factor in the speed of the total process of operation.

The advantage of arranged storage are that repeated orientation operations of the product are not necessary, the storage density is great, a high as possible "Loading" and "Unloading" rate is obtained, a standarisation of the processing apparatus is possible, and the chance of damaging is slight, moreover, simple additional operations can be carried out onto the stored products, an accompanying stream and storage of information being possible, whereby individual product samples can be continuously followed throughout the complete line of production. The disadvantages are: a more expensive storage system, a more expensive unloading system, and a "Loading" unit which is bound to a minimum price, in spite of the simplicity of the product to be processed.

Further there is a number of solutions to arrange storage of products, although only some of them are used as a normal or conventional solution to intermediate storage in the method for producing in groups.

Some of the most frequent methods for intermediate storage are: a storage in profile pipes, usually made from plastic; a storage on an adhesive tape which is wound; a storage on (profiled) sheetlike storage means, and a storage in profiled foil strip, whereafter being wound.

In choosing such a storage system of products and production parts several factors are important, i.e. the cost of storage, the chance of damaging stored products, the accuracy of a position within the storage unit, the required volume (or floor surface) on the production machine, the compactness of the storage, the processing ability of the storage units, the easy operational conditions of storage machines to be expected, the expected reliability of operating machines, the standarisation possibilities of the system and the apparatus with respect to the machines and products already present and to be expected. The shape and dimensions of the products to tbe stored, and the ability of "Loading" and "Unloading" storage units automatically.

Each of the said storage methods has its own advantages and disadvantages with respect to these choice criteria and considerations.

For instance, the storage in profiled pipes, the storage on adhesive tape which is wound, and the storage in profiled foil strip are, with respect to volume and processing ability of the storage units, less suitable than the storage on (profiled) sheetlike storage means for storing products in the order of magnitude of 5—10 cm.

Indeed the storage of the individual product information in wound series is much simpler than in three-dimensionally stored products. Also very small longitudinal products for instance can be stored more compactly in wound form (Adhesive tape) then on sheetlike storage means.

In view of the fact that media to be wound should be essentially flexible, in general the chance of damaging the stored products during winding is greater than during storage on stiff storage means.

With respect to the information processing it is remarked that the information stored during production with respect to product or method characteristics and/or quality usually comes from checkings carried out on the products. Usually this takes place as a separate operation between mechanised operations, but sometimes as part of a mechanised operation or even as a separate automised operation.

The obtained data are generally used to find one or another adjusting value (Parameter) for a subsequent process to be applied onto the products, i.e. control activity.

Maybe apart from some highly automised production methods the obtained information is always averaged for a parameter to be determined, instead of (automatically) choosing this subsequent adjusting value for individual product. The product information nearly always is collected by hand and possibly averaged, however, the measurements and controls are often carried out electronically. In most cases the obtained data are not stored electronically.

The methods, in which beside the product stream also a parallel information stream is present, are methods consisting of a continuous line, herewith no branches and intermediate supplies appear, a production form in groups (in which there are several branching possibilities and in which by definition large amounts of intermediate supplies are present in different steps of the process) having a parallel information stream with respect to proceeding method and product characteristics, stored per individual product, was not known up to the data of the present invention.

In the device according to US Patent Specification 3,884,363 and in all other known devices in the present field of techniques a standard unit is missing which provides a solution for the entire problem of handling products between successive processing machines (as described above) with its partial functions with respect to unloading a machine, the regulated storage of products or product parts, loading a next machine, and collecting, processing and further provision of accompanying individual product information.

With the aid of the device according to the US Patent Specification one tends to displace products of considerably large bulk slowly from a loading place to a place on a pallet, but the supply and discharge of empty, filled pallets respectively, cannot take place during the operation of the gripper device (1st drawback).

In order to exchange for instance processed plates by unprocessed plates or the like the device has to stopped (2nd drawback). Because the manner of driving causes a long cycle time and a low frequency in the event of a large stroke length, said device is not suitable for fast operations (1 cycle/sec.) of the gripper. A continuous reciprocation of the gripper arm without shocks is not possible as the direction of rotation of the motor and the pertaining screw spindle has to be reversed all the time, in this way no optimal gradual increase in speed of the gripper can be obtained because of the accelerations occurring when starting and stopping the movement of the arm (3rd drawback), because of the spatial construction (overhead-support) only two units can be combined to form a composed unit, said two units together using the fixed location (4th drawback), mecahnically coupling the main drive so as to create a synchronisation with machines that operate at a high speed is not possible because each displacing device has its own electric drive.

An optimal solution of the earlier described producing handling problem cannot be provided by the use of said known device either because no combination is possible of the advantages of a mechanically displacing system, in this case a pick and place unit (e.g. speed, accuracy, simplicity, reliability) with the above-mentioned advantages of a Robot controlled by means of a microprocessor (flexibility, programmability, storage of information and processing possibilities, etc.) and also with an optimal process for storage (flexible, compact, cheap, safe, ergonomically optimal, etc.), with respect to this production form in groups and product range.

Moreover, this solution should have the following properties: a very large applicability with resepct to the variety of products and the shape and embodiment of the production machine, a great accuracy of the pick and place position, together with good synchronising possibilities, and a rate as high as possible (100 cycles/min., a variable pattern of motion, etc.).

The present invention aims at abolishing the above-mentioned drawbacks and at providing, by means of a standard unit, a cheap, simple standard solution to the above-described total problem with respect to the processing of products or parts of products between subsequent independent production machines, one and another in such a way that the standard unit can be used as desired for unloading as well as loading production machines.

The invention is therefore characterized in that said products are moving step by step along the pick and place mechanism: said series of trays is moving step by step under the gripper arm in the same direction in which the products are moving:

the products are transferred into or from each of the series of trays according to a predetermined pattern of coordinates: the gripper arm with pliers is movable with two degrees of freedom in a vertical plane transverse to the path of movement of the trays by a displacement assembly: the displacement assembly comprises: a first reciprocating member hingedly secured to the end of a lever; said lever being provided at its other end with a roll (20) in engagement with a cam disc secured to an individually driven shaft; said lever being able to tilt about a hinge point whose location is adjustable by a drive member under the control of a microprocessor; said first displacement member being connected, via transmitting means to a second displacement member which bears the gripper arm so that the movement of the displacement assembly is synchronised with the step by step movements of the products and of the trays respectively.

By using the present features a continuous stacking and unstacking of for instance full (processed) and empty storage plates takes place, the gripper is also subjected to a gradual increase in speed (consequently there are slight accelerations) and less shocks, and small mass moments of inertia occur, so that a higher stroke frequency of the gripper and a higher positioning accuracy is obtained. It is also possible to combine a number of mechanisms according to the invention about one positioning point.

A pair of two of said pick and place units together enables the processing of the complete product operation between two subsequent production machines. One mechanism or one unit is coupled to a production machine for unloading finished products in the present case parts of products and the storage thereof, the second unit being adapted to place said parts in any time from the stored supply automatically onto a subsequent production machine.

The displacement of the stored supply from one unit towards another unit can be carried out manually and in principle at any time and via any way during operation of the unit. The standard units according to the invention have been carried out in such a way, that it is possible to carry out all partial functions required for the above-described process, and moreover a number of additional possibilities have been provided.

The found solution includes a combination of the most important advantages of the above-described solutions to the separated partial functions.

In other words the displacement assembly combines the advantages of the rigid mechanical arm, viz. a great accuracy, a high speed, a high tact frequency, simplicity, reliability, acceleration process to be optimalised, and large timing and synchronising possibilities, wuth the specific advantages of the Robot, consisting of a very large flexibility with resepct to possibilities of application, possibilities of variation during operation with respect to the process of the pattern of motion, the possibility of storage and possibility for giving information about the characteristics of the products, in which said information can also be integrated into a larger, central information system, and the possibility to carry out other functions (e.g. controls) beside displacement functions, the followed storage method includes the above-mentioned advantages of the arranged storage, viz.: a slight chance of damaging products/parts, a large storage density, the possibility of high loading and unloading rate, a standardisation of the apparatus for storage, also outside the apparatus for processing the storage means, the possibility of simply intermediately carrying out additional operations onto products/parts, and the possibility of maintaining accompanying individual product information or characteristics.

Hereto can be added the specific properties of the storage method on e.g. sheetlike storage means; viz. the great compactness of the storage owing to the possibility of piling said storage means, the great accuracy of the position in the storage units, a slight required floor surface and volume of the supply in the apparatus for processing the storage means, a very good processing ability of large amounts of stored material, a great operating facility of the apparatus for processing the storage means (supplying and removing a pile of sheetlike storage means from the machine), great possibilities of application as to the dimensions and shape of products/parts to be stored, and slight and slow displacements of the sheetlike storage means during operation, resulting in a great accuracy of their position.

Beside the solution to the above-described processing problem the present apparatus for processing storage means also provides possibilities for completely different applications, for instance the present apparatus itself can be applied as a assembling or operating machine, the operations being carried out onto the products situtated in the sheetlike storage means by means of an instrument arranged in the gripper; the present apparatus can be applied as a packing machine if the sheetlike storage means have been provided with or are embodied as packing material; and the microprocessor control with its memory may function as a member for recording data/as an operation control member for the coupled production machine.

As these possibilities relate to the same sector or production and the same variety of products as those with respect to which the present apparatus for processing storage means has been developed in first instance, this means an important enlargement of the possibilities of application.

As mentioned already in the control of the present apparatus it is aimed at to obtain a flexibility as large as possible as to the field of application of the apparatus for processing the storage means as a whole, as well as to the variation possibilities within the processing method to be carried out.

Further to the mechanically very large possibilities of application also the electronical control has been carried out in such a way that in principle each way of external coupling with each further information processing unit of the production system is possible. Owing to the presence of a memory within the microprocessor used for control of the present apparatus an apparatus for processing the storage means therefore is also adapted to store and process data of further production units and apparatus for processing storage means, owing to which it is possible for instance to collect information of one specific product sample during its full operation through the complete production line and to keep said information together, to operate and process said information together with information of other products, etc. This is possible by a direct communication between several production units as well as through a central information storage, owing to its specific embodiment the control by means of a microprocessor has also the following possibilities with respect to the storage and processing of information, except for the direct control of the apparatus for processing the storage means itself.

Throughout the complete production line via a production machine information can be collected, owing to which at the end of the production process individual information, which is collected per product, of the compete construction process is available, this is a unique possibility for a production method in groups. Hereby also an automatic statistical processing of all product data is possible (such as realised quality level), and also the desired information of any product can be obtained, the coupling of the apparatus for processing storage means individually or through the central information storage with the computer systems provides a possibility to get a continuous view of the operating conditions of the complete production method. Therefore, the control of the apparatus for processing storage means can also be used as a date registration means or as a control apparatus for operating properties of each coupled machine. In its original function as control of the mechanical apparatus during processing the storage means one of the possibilities is also to select products on the basis of available information, whereafter said products can be arranged in any desired pattern onto the sheetlike storage means. By functioning as a independent operating machine (e.g. as a coding automatic device, in which the products are coded onto a sheetlike storage means through an instrument arranged in the gripper) it is also possible, on account of information storage and the processing possibilities of the apparatus for processing storage means, to subject the stored products to several operations (e.g. several codings).

A further advantage of the application of a microprocessor known per se for controlling the present apparatus for processing storage means is that, if desired, the software can be changed already during operation for a subsequent different use of the apparatus for processing storage means, or of the control unit. Thanks to the present invention it has been enabled now to apply the combination of a microprocessor control with a variable mechanical lever owing to which to which a two-co-ordinate surface can be attained in a completely scanning way.

The standard apparatus according to the present invention can be coupled as desired mechanically as well as electrically as an independent unit to an existing product operating or assembling machine, said unit thereafter being able to remove products from said machine, to store said products onto a storage means (preferably sheetlike) according to any arbitrarily programmable matrix form and sequence, whereafter said storage means are piled again; or to automatically remove products from a pile of storage means in case said storage means are filled with products according to a regular matrix, and to supply said products to the coupled machine, whereafter the emptied storage means are piled again; during which also individual accompanying information with respect to the method and/or the product can be stored and provided into and from the memory of the standard apparatus; and both piles of storage means provided on the unit being mechanically operated from the lower side or supplied on the lower side. The pick and place mechanism according to the present invention has an adjustable stroke length owing to the use of a mecahnically driven lever, however, the hinge point of said lever being adapted to be arbitrarily displaced by means of a drive which is controlled by a microprocessor. A storage assembly for products from a production form in groups is provided, in which information with respect to process and product is automatically obtained for each individual product and is stored up to further operation and/or supply.

It is remarked that from product engineering, volume 31, September 12, 1960, page 78, New York, USA, a lever mechanism with a variable pivot is known. A rotating movement is changed into a linear reciprocating movement with the same frequency, the stroke length of the linear movement being adjustable by means of displacing the pivot point via a screw spindle. One stroke end remains fixed then. The driving takes place by means of a crank shaft with a drive rod.

The device according to British Patent Specification 1038 (A.D. 1910) is completely mechanical, so it is little flexible, it can be adjusted according to a different hole pattern only by exchanging/changing machine parts, after being filled/emptied a plate has to be manually exchanged by a new one. When doing this it is necessary to stop the machine. No (UN) stacking of the full and empty plates takes place. Filling according to the X—Y pattern takes place by transporting the plate or tray in 2 perpendicular directions in a horizontal plane under the gripper arm during the filling operation, in the present device the plate is displaced in one direction while the gripper programming takes care of the displacement in another direction.

Said construction differs completely from the present device, it is composed of completely different components. Therefore said known device is not suitable for high speeds which is the object of the present invention. Electronic information processing/storage possibilities are absent.

The present invention will be further elucidated now from the drawings.

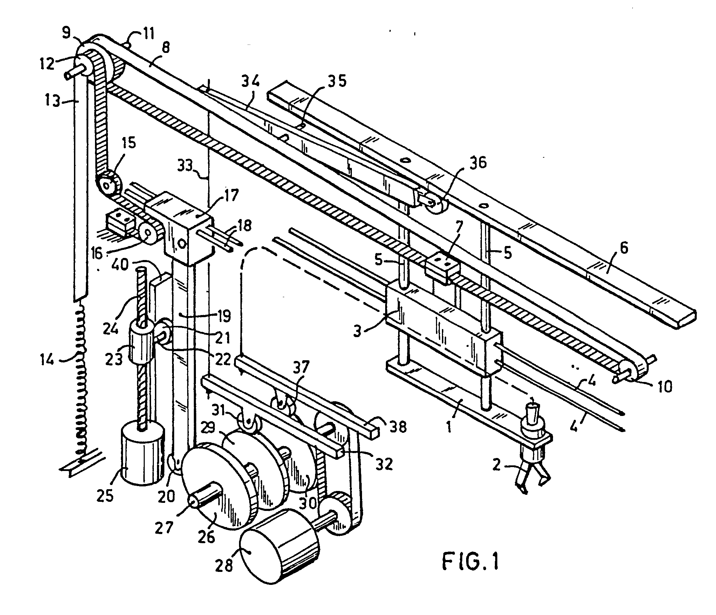

Figure 1 shows schematically a perspective view of an embodiment of an automatically controllable gripper arm with pliers according to the invention.

Figure 2 shows schematically an embodiment of the application of a gripper arm with pliers, arranged between two piles of sheetlike storage means.

The gripper arm 1 with pliers 2 is displaceable by means of a displacement assembly, comprising of a first reciprocating displacement member 17, being hingedly secured to one end of a lever 19 which is adapted to tilt about a hinge point 21, which is adjustable by a drive member 25 with microprocessor control, by means of a roll 20. Said roll is placed on the other end of the lever and is in engagement with a cam disc 26 which is secured to an individual shaft 27 driven by means of a motor 28. The first displacement member 17 is connected via a first transfer means, e.g. a toothed belt 13, and a second transfer means 8, e.g. a toothed belt too, with the second displacement member 3 to which the gripper arm 1 is secured. The toothed belt 13 on the one hand at one end is elastically connected to the frame of the pick and place mechanism by means of a return spring 14 and on the other hand at its other end secured to this frame. The toothed belt 13 is displaceable along a roll 12 on a shaft 11 and a roll 15, both being provided on the frame, and along a roll 16 provided on the first displacement member 17. The gripper arm cooperates with a storage system for products to be processed and is displaceable in coordination by means of a separately controllable drive (not shown).

The hinge point of the lever 19 is formed of a roll 21 bearing on a support member 40 on the frame and being secured on a nut 23 with a shaft 22, said nut being arranged on a screw bar 24 which is driven by the drive means consisting of a step by step motor 25 with microprocessor control.

The second transfer means 8 is, for instance, an endless toothed belt and is displaceable around a roll 9, which is provided on the said shaft 11, and around a roll 10. The toothed belt at its lower run is provided with a securing member 7 for the second transfer means (8). On the driven shaft 27 also a cam disc 29 is provided, which is in engagement with a roll 31 on a lever 32. Said lever at one of its ends is connected through a tie with a lever 34 which is tiltable on a shaft 35 in the frame and which at its other end is provided with a roll 36 which is in engagement with a carrier means 6 for the gripper arm 1. Said carrier means comprises two guide bars 5, 5 secured thereto, said guide bars being slidably protruding through the second displacement member 3 and at the end of which the gripper arm 1 with pliers 2 is secured.

Both displacement members 17 and 3 are each reciprocable along corresponding guide members each consisting of two mutually parallel bars 18, 18 and 4, 4 respectively, which are secured in the frame. The driven shaft 27 is also provided with a cam disc 30 which is in engagement with a roll 37 on a lever 38, which at one end is connected with a pliers 2, which is adapted to be elastically brought in its locking position. Also a fourth cam disc (not shown) could be provided on the driven shaft 27 in order to make the pliers rotate about its vertical shaft.

The working is as follows:

The cam disc 26 makes the lever reciprocate about the hinge point 21 owing to which the first displacement member is moving and therewith makes the toothed belt 13 and consequently the roll 9 rotate to and fro. Hereby also the toothed belt 8 and consequently the second displacement member 3 secured thereto are driven along the guide bars 4, 4 with a stroke length which is in proportion to the stroke length of the first displacement member 17 determined by the roll diameter ratio of the rolls 9 and 12, as well as by the pulley configuration of the rolls 12, 15 and 16.

The unique of the present invention is that the hinge point 21 is not fixed but can be displaced along the lever by means of the screw bar 24 and the nut 23, driven by the step by step motor 25. Owing thereto the stroke length of the first displacement member 17 ranges and consequently also the stroke length of the second displacement member 3. By a right choice of the dimensions and geometry of the assembly it is effected that an extreme point of the path of the second displacement member 3 remains at its position, notwithstanding the position of the hinge point 21. The opening and closing of the pliers can be changed by adapting the shape of the cam disc 30.

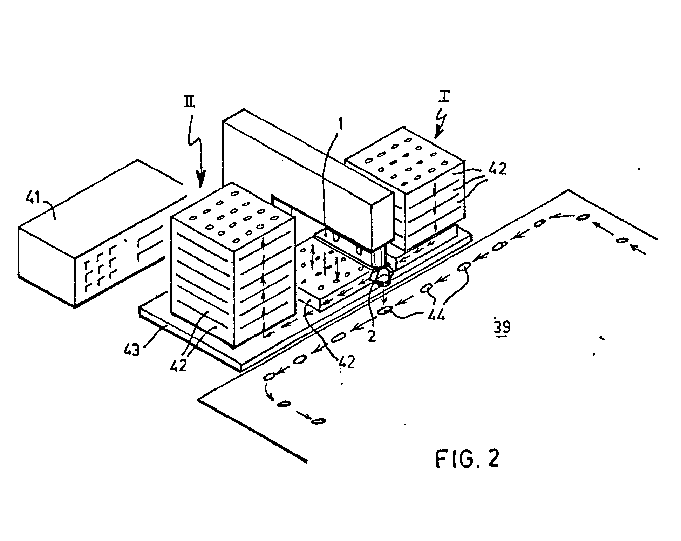

In figure 2 an example of application of the present pick and place mechanism is schematically shown, in which the gripper arm with pliers is coupled to a production machine 39, from which each time a product 44 is removed by means of the pliers 2 and is placed onto a sheetlike storage means 42 according to an arbitrarily programmable matrix form and sequence.

Said storage means comes from a pile I with storage means place on the frame 43 of the pick and place mechanism, which in the present case are empty, each time the lower storage means being supplied from the pile I to a place below the gripper arm with pliers 2. Herewith it is necessary that the pile I is lifted e.g. by means of a motor through a cam mechanism and a perpendicularly guiding member (not shown), in which for instance four tensile magnets are used, which grip below the lowest but one storage means. Thereafter the lowest storage means is placed on a guiding gutter. By means of a further motor through a cam mechanism the storage means displaced from the pile I is displaced along the frame in the direction indicated by arrows. This takes place for instance by means of a beam with pawls (not shown). Said pawls take the storage means along through a pattern of grooves at the lower side of the storage means. The rotation of the said further motor pushes the storage means to the subsequent series. When the storage means has covered its maximal way in the indicated direction of displacement, during which the storage means according to the desired matrix form and sequence, determined by the programming of a microprocessor 44, has been supplied with products and is completely below the pile II, a microswitch is operated and through a motor, cam movement and vertical straight guiding the storage means is lifted below the pile II, supporting on four resilient pawls. If a pile with supplied storage means has to be emptied the abovedescribed operations take place in reverse direction.

In the abovedescribed example of application the great advantage appears that during operation the piles are accessible at all times to an operating person, in order to supply the piles or remove same.

By means of a simple locking mechanism one or more of the described cam discs can be disconnected so that therefore all gripper movements during operation can be switched off arbitrarily, the stroke length and speed of the horizontal movement of the gripper arm being practically unlimitedly variable yet.

The great number of possibilities of the present stoke accelerating mechanism is obtained as to speed, accuracy and adjustment by the step by step motor drive controlled by a microprocessor.

### Claims

1. A pick and place mechanism comprising an automatically controllable gripper arm (1) with pliers (2) protruding from a frame which are both provided with associated drive means for transferring products (44) from one fixed place adjacent said pick and place mechanism into a tray (42) of a series of trays (42) or vice versa, characterized in that

— said products (44) are moving step by step along the pick and place mechanism;
— said series of trays (42) is moving step by step under the gripper arm (1) in the same direction in which the products (44) are moving;
— the products (44) are transferred into or from each of the series of trays (42) according to a predetermined pattern of coordinates;
— the gripper arm (1) with pliers (2) is movable with two degrees of freedom in a vertical plane transverse to the path of movement of the trays (42) by a displacement assembly;
— the displacement assembly comprises:
  . a first reciprocating member (17) hingedly secured to one end of a lever (19);
  . said lever (19) being provided at its other end with a roll (20) in engagement with a cam disc (26) secured to an individually driven shaft (27);
  . said lever (19) being able to tilt about a hinge point (21) whose location is adjustable by a drive member (25) under the control of a microprocessor;

. said first displacement member (17) being connected, via transmitting means (13, 8) to a second displacement member (3) which bears the gripper arm (1) so that the movement of the displacement assembly is synchronised with the step by step movements of the products (44) and of the trays (42) respectively.

2. A mechanism in accordance with claim 1, characterized in that the transmitting means comprise a first transmitting member (13) and a second transmitting member (8), the first transmitting member (13) thereof being connected to the frame elastically at its one end and connected fixedly to the frame at its other end.

3. A mechanism in accordance with claims 1 and 2, characterized in that the first and second displacement members are each adapted to be moved over a pertaining guide, consisting of two mutually parallel bars (18, 18; 4, 4).

4. A mechanism in accordance with claims 1 and 2, characterized in that the hinge point consists of a roll (21), resting on a support member (40) on the frame and which is connected to a nut (23) provided on a threaded bar (16) which is driven by the drive member, consisting of a step by step motor (25).

5. A mechanism in accordance with claims 1 and 2, characterized in that the first and second transmitting members each consist of toothed belts (13, 8).

6. A mechanism in accordance with claim 5, characterized in that at its one end the first transmitting member (13) is secured to the frame by means of a return spring, and that it is displaceable over a roll (12), provided on a shaft (11), and a roll (15), both secured onto the frame, and over a roll (16), arranged on the first displacement member (17).

7. A mechanism in accordance with claim 6, characterized in that the second transmitting member (8) is an endless belt; it is displaceable over a roll (9) secured on the said shaft (11), and over a roll (10); and that it is provided with a securing member (7) to which is secured the second displacement member (3).

8. A mechanism in accordance with claims 1, 2 and 3, characterized in that on the individually driven shaft (27) a cam disc (29) is provided in engagement with a roll (31) mounted on a tiltable lever (23), said tiltable member (23) being connected via a bar mechanism and a carrier member (6) to the gripper arm (1) with pliers (2), so that the rotation of the cam disc (29) controls the displacement of said gripper arm (1) with pliers (2) perpendicularly to the two pertaining mutually parallel bars (4, 4).

9. A mechanism in accordance with claim 8, characterized in that the carrier member (6) comprises two guide bars (5, 5), secured thereto, which slidably protrude through the second displacement member (3) and at the end of which the gripper arm (1) with pliers (2) is secured.

10. A mechanism in accordance with claim 8, characterized in that the bar mechanism consists of a link (33), connected at one end to one end of a lever (34) which is adapted to hinge on a shaft (35) provided within the frame and containing at its other end a roll (36) which is in engagement with the carrier member (6).

11. A mechanism in accordance with claims 1 and 2, characterized in that on the individually driven shaft (27) a cam disc (30) is secured which is in engagement with a roll (37) on a lever (38), connected at one end to the spring-biased pliers (2).

12. A mechanism in accordance with any of the preceding claims, characterized in that per pick and place operation characterizing information is recorded, passed on and/or processed, by means of microprocessors.

**Pantentansprüche**

1 Ein Greif- und Positionsmechanismus, welches einen aus einem Gestell hervorragenden, automatisch steuerbaren Greiferarm (1) nebst der Zange (2) enthält, welche beiden mit zusammenwirkenden Antriebselementen versehen sind für die Zuführung der Produkten (44) aus einer bestimmten Stelle nebem dem obenerwähnten Greifund Positionsmechanismus in eine Lagerungsplatte (42) aus einer Reihe von Lagerunsplatte (42) oder vice versa, dadurch gekennzeichnet, dass;

— diese Produkte (44) Schritt für Schritt dem Greif- und Positionsmechanismus entlanglaufen;
— die genannte Reihe der Lagerungsplatten (42) sich Schritt für Schritt unter den Greiferarm (1) in der selben Richtung bewegt, worin die Produkte (44) sich bewegen;
— die Produkte (44) werden einem festgestellten Koordinatenmuster gemäss herein oder heraus jeden Lagerungsplatte transportiert;
— der Greiferarm (1) nebst der Zange (2) mit zwei Freiheitsgraden in finer waagerechten Fläche quer zu dem Fahrweg der Lagerungsplatten (42) mittels einer Transportvorrichtung bewegbar ist;
— die Transportvorrichtung enthält;
. ein erstes hin und her bewegbares Glied (17), das gelenkig an einem Ende des Hebels (19) angeordnet, ist;
. dieser Hebel (19) ist an seinem anderen Ende mit einer Rolle (20) im Angriff mit einer auf eine gesondert angetreibene Achse (27) befestigten Nockenscheibe (26) versehen;
. dieser Hebel (19) kann über einen Gelenkpunkt (21) kippen, dessen Position mittels eines Antriebselements (25) unter Steuerung eines Mikroprozessors einstellbar ist;
. dieses erste Förderglied (17) ist via Uebertragungsglieder (13, 8) mit einem zweiten Förderglied (3), das der Greiferarm (1) trägt, verbunden, so dass die Bewegung der Transportvorrichtung mit den Schritt für Schritt Bewegungen beziehungsweise der Produkte (44) und der Lagerungsplatten (42) synchronisiert ist.

2. Ein Mechanismus nach Anspruch 1, dadurch gekennzeichnet, dass die Uebertragungsglieder ein erstes Uebertragungsglied (13) und ein zweites Uebertragungsglied (8) enthalten, dass diesbezügliche erste Uebertragungsglied (13) ist an seinem einen Ende elastisch mit dem Gestell verbunden und an seinem anderen Ende fest mit dem Gestell verbunden.

3. Ein Mechanismus nach Anspüchen 1 und 2, dadurch gekennzeichnet, dass das erste und das zweite Förderglied je über eine dazugehörende aus zwei gegenseitig parallelen Stangen (18, 18; 4, 4) bestehende Führung laufen.

4. Ein Mechanismus nach Ansprüchen 1 und 2, dadurch gekennzeichnet, dass der Gelenkpunkt aus einer Rolle (21) besteht, welche sich auf eine Stütze (40) auf das Gestell stützt und welche mit einer Mutter (23) auf eine Schraubenspindel (16) versehen ist, welche mittels einem Antriebselement bestehend aus einem Schrittmotor (25) angetrieben wird.

5. Ein Mechanismus nach Ansprüchen 1 und 2, dadurch gekennzeichnet, dass das erste und das zweite Uebertragungsglied je aus Zahnriemen (13, 8) bestehen.

6. Ein Mechanismus nach Anspruch 5, dadurch gekennzeichnet, dass das erste Uebertragungsglied (13) an seinem einen Ende mittels einer Rückstellfeder auf das Gestell befestigt ist und dass es über eine auf Achse (11) angeordnete Rolle (12), und eine Rolle (15), welche beiden auf das Gestell angeordnet sind, und über eine Rolle (16) vorhanden auf das erste Förderglied (17), verlegbar ist.

7. Ein Machanismus nach Anspruch 6, dadurch gekennzeichnet, dass das zweite Uebertragungsglied (8) ein Förderband ohne Ende ist; das verlegbar is über eine auf die Achse (11) angeordnete Rolle (9), und über eine Rolle (10); und dass es mit einem Feststellglied (7), woran das zweite Förderglied (3) angeordnet ist, versehen ist.

8. Ein Mechansimus nach Ansprüchen 1, 2 und 3, dadurch gekennzeichnet, dass auf die gesondert angetriebene Achse (27) eine Nockenscheibe (29) im Angriff mit einer auf einen kippbaren Hebel (32) montierten Rolle (31) vorhanden ist, welcher kippbare Hebel (32) über ein Stangenmechanismus und einen Träger (6) mit dem Greiferarm (1) nebst der Zange (2) verbunden ist, so dass die Drehung der Nockenscheibe (29) die Förderung dieses Greiferarms (1) der Zange (2) waagerecht auf die zwei zugehörenden gegenseitig parallelen Stngen (4, 4) steuert.

9. Ein Mechanismus nach Anspruch 8, dadurch gekennzeichnet, dass der Träger (6) zwei darauf angeordnete Führungsstangen (5, 5) enthält, welche verschiebbar durch das zweite Föderglied (3) hervorragen and deren Ende der Greiferarm (1) nebst der Zange (2) befestigt ist.

10. Ein Mechanismus nach Anspruch 8, dadurch gekennzeichnet, dass das Stangenmechanismus aus einer Zugstange (33) besteht, an ihrem einem Ende verbunden mit dem Hebel (34), welche gelenkig ist auf eine in dem Gestell angeordnete Achse (35) und an ihrem anderen Ende eine Rolle (36) enthält, welche in Angriff mit dem Träger (6) ist.

11. Ein Mechanismus nach Ansprüchen 1 und 2, dadurch gekennzeichnet, dass auf die gesondert angetriebene Achse (27) eine Nockenscheibe (30) angeordnet ist, welche im Angriff ist mit der Rolle (37) auf einen Hebel (38), welcher an seinem einen Ende mit der unter Federkraft stehenden Zange (2) verbunden ist.

12. Ein Mechanismus nach einem der vorgehenden Ansprüche, dadurch gekennzeichnet, dass per Greif- und Positionshandlung die kennzeichnenden Daten mittels Mikroprozessoren aufgezeichnet, weitergeleitet und/oder verwirkt sind.

**Revendications**

1. Mécanisme d'attrapage et de pose, comprenant un bras de préhension (1) à pince (2) qui font saillie d'un châssis et qui sont tous les deux munis d'organes d'entraînement associés pour transférer des produits (44) à partir d'un endroit fixe, adjacent audit mécanisme d'attrapage et de pose, vers un plateau de stockage (42) faisant partie d'une série de plateaux de stockage (42), ou vice versa, caractérisé en ce que

— lesdits produits (44) se déplacent pas à pas le long du mécanisme d'attrapage et de pose;
— ladite série de plateaux de stockage (42) se déplace pas à pas au dessous du bras de préhension (1) dans la même direction que les produits (44);
— les produits (44) sont disposés dans ou retirés de chacune des séries de plateaux de stockage (42) suivant un réseau de coordonnées prédéterminé;
— le bras de préhension (1) à pince (2) est mobile, avec deux degrés de latitude, dans un plan vertical, transversal à la trajectoire de déplacement des plateaux de stockage (42), et cela par l'intermédiaire d'un système de déplacement;
. un premier organe de va-et-vient (17) articulé à une extrémité d'un levier (19);
. ledit levier (19) étant pourvu à son autre extrémité d'un rouleau (20) qui s'engage dans un disque à cames (26) fixé à un arbre (27) entraîné séparément;
. ledit levier (19) étant susceptible de pivoter autour d'un point d'articulation (21) dont la position peut être ajustée par un organe d'entraînement (25) sous la commande d'un microprocesseur;
. ledit premier organe de va-et-vient (17) étant relié, via des moyens de transmission (13, 8), à un second organe de déplacement (3) supportant le bras de préhension (1), de sorte que le mouvement du système de déplacement est en synchronisme avec les mouvements pas à pas respectivement des produits (44) et des plateaux de stockage (42).

2. Méchanisme selon la revendication 1, caractérisé en ce que les moyens de transmission se composent d'un premier organe de transmission (13) et d'un second organe de transmission (8), le premier organe de transmission (13) étant relié par ses extrémités au châssis, respectivement de façon souple et de façon fixe.

3. Mécanisme selon les revendications 1 et 2, caractérisé en ce que les premier et second organes de déplacement sont chacun adaptés à être déplacés sur une conduite correspondante, lequelle se compose de deux tiges parallèles (18, 18; 4, 4).

4. Mécanisme selon les revendicaions 1 et 2, caractérisé en ce que le point d'articulation est constitué par un rouleau (21) prenant appui sur un organe de support (40) sur le chässis et qui est relié à un écrou (23) disposé sur une tige filetée (16) entraînée par l'organe d'entraînement, constitué par un moteur pas à pas (25).

5. Mécanisme selon les revendication 1 et 2, caractérisé en ce que les premier et second organes de transmission se composent chacun de courroies dentées (13, 8).

6. Mécanisme selon la revendication 5, caractérisé en ce que le premier organe de transmission (13) est fixé par une extrémité au châssis par l'intermédiaire d'un ressort de retour, et en ce qu'il est déplaçable sur un rouleau (12) disposé sur un arbre (11), et sur un rouleau (15), ces deux étant fixés sur le châssis, ainsi que sur un rouleau (16) disposé sur le premier organe de va-et-vient (17).

7. Mécanisme selon la revendication 6, caractérisé en ce que le second organe de transmission (8) est une courroie sans fin, en ce qu'il est déplaçable sur un rouleau (9) disposé sur ledit arbre (11) et sur un rouleau (10), et en ce qu'il est pourvu d'un organe de fixation (7) immobilisant le second organe de déplacement (3).

8. Mécanisme selon les revendications 1, 2 et 3, caractérisé en ce que sur l'arbre entraîne séparément (27) est diposé un disque à cames (29) dans lequel s'engage un rouleau (31) fixé à un levier pivotable (32), lequel levier pivotable (32) est relié, via un mécanisme de tiges et un organe de support (6), au bras de préhension (1) à pince (2), de manière que la rotation du disque à cames (26) contrôle le déplacement dudit bras de préhension (1) à pince (2) perpendiculairement aux deux tiges correspondantes (4, 4) qui sont mutuellement parallèles.

9. Mécanisme selon la revendication 8, caractérisé en ce que l'organe de support (6) comprend deux tiges de guidage (5, 5) qui y sont immobilisées et qui par coulissement font saillie à travers le second organe de déplacement (3), et en ce qu'il comporte à son extrémité le bras de préhension (1) à pince (2).

10. Mécanisme selon la revendication 8, caractérisé en ce que le mécanisme de tiges se compose d'une barre de traction (33) reliée par une de ses extrémités à l'extrémité du levier (34), lequel est adapté à articuler sur un arbre (35) ménagé dans le châssis et qui comporte à son autre extrémité un rouleau (36) qui s'engage dans l'organe de support (6).

11. Méchanisme selon les revendications 1 et 2, caractérisé en ce que sur l'arbre entraîne séparément (27) est disposé un disque à cames (30) dans lequel s'engage un rouleau (37) disposé sur un levier (38) qui par l'une de ses extrémités est relié à la pine (2), laquelle est soumise à l'effort d'un ressort.

12. Mécanisme selon l'une des revendications précédentes, caractérisé en ce que par opération d'attrapage et de pose, une information caractérisante est emmagasinée et/ou élaborée, au moyen de microprocesseurs.

FIG.1

FIG. 2